# EUROPÄISCHE PATENTANMELDUNG

(11) **EP 3 922 571 A1**
(43) Veröffentlichungstag der Anmeldung: **15.12.2021**
(21) Anmeldenummer: 21178306.3
(22) Anmeldetag: 08.06.2021
(51) Int. Cl.: B65D 3/30, B31B 50/59, B31F 1/00, B65B 47/04

(54) **FLANSCHSTABILISATOR FÜR EIN FORMTEIL AUS FASERWERKSTOFF, FORMTEIL, VERFAHREN ZUR HERSTELLUNG EINES FORMTEILS UND VERWENDUNG EINES FLANSCHSTABILISATORS**

(30) Priorität: 11.06.2020 DE 102020115546
(71) Anmelder: Technische Universität Dresden, 01067 Dresden (DE)
(72) Erfinder: MÜLLER, Tobias, 01097 Dresden (DE)
(74) Vertreter: Gottfried, Hans-Peter

(57) **Zusammenfassung**

Die Erfindung betrifft ein Formteil, ein Verfahren zu dessen Herstellung sowie dessen Verwendung. Das Formteil ist aus einem flächigen Faserwerkstoff geformt und weist einen Boden (2), eine Zarge (4) und eine Öffnung auf, wobei die Öffnung von einem umlaufenden Flansch (6) umgeben ist. Nach der Erfindung umfasst das Formteil (1) einen Flanschstabilisator (10), der an der zum Boden (2) hin weisenden zweiten Flachseite (18) des Flanschs (6) angebracht ist. Der Flanschstabilisator (10) ist scheibenförmig ausgebildet und weist eine Innenkontur (12) auf, die der angestrebten Querschnittsform des Formteils (1) im Bereich der Öffnung entspricht, ein Überstreifen über die Zarge (4) im Bereich des Bodens (2) bis zum Flansch (6) hin ermöglicht. Die Flachseiten (16, 18) des Flanschstabilisators (10) erstrecken sich im Wesentlichen parallel zum Flansch (6), wobei er die Querschnittsform der Zarge (4) im Bereich der Öffnung und des Flanschs (6) festlegt und stabilisiert.

## Beschreibung

Die Erfindung betrifft ein Formteil, das aus einem flächigen Faserwerkstoff geformt ist und einen Boden, eine Zarge und eine Öffnung aufweist, wobei die Öffnung von einem umlaufenden Flansch umgeben ist. Die Erfindung betrifft weiterhin ein Verfahren zur Herstellung eines Formteils durch Formen aus einem ebenen Zuschnitt eines Faserwerkstoffs, wobei das Formteil einen Boden, eine Zarge und eine Öffnung aufweist, wobei die Öffnung von einem umlaufenden Flansch umgeben ist, der mit einem Flanschstabilisator versehen wird. Die Erfindung betrifft auch eine Verwendung eines Flanschstabilisators an einem Formteil, das durch Formen aus einem ebenen Zuschnitt eines Faserwerkstoffs hergestellt wurde, wobei das Formteil einen Boden, eine Zarge und eine Öffnung aufweist, wobei die Öffnung von einem umlaufenden Flansch umgeben ist, der mit dem Flanschstabilisator versehen wird. Als Faserwerkstoff kommen insbesondere Papier oder Karton in Betracht.

Packmittel mit einem Flanschstabilisator sind aus dem Stand der Technik bekannt. Die Druckschrift DE 31 02 061 A1 beschreibt einen Flanschstabilisator, hier als Griffring bezeichnet, für einen Mündungsteil eines Behälters, wobei der Griffring aus einer gesondert hergestellten, scheibenähnlichen Einheit aus z. B. Kunststoff oder Pappe besteht. Der Griffring hat eine Öffnung, die so auf den Mündungsteil abgestimmt ist, dass die Möglichkeit besteht, den Griffring auf einem im Voraus bestimmten Bereich des Mündungsteils zu fixieren. Das Fixieren erfolgt nach unterschiedlichen Verfahren, beispielsweise durch engen Sitz, durch Aufschrumpfen, durch nasenähnliche Erhöhungen oder Ausweitungen am Mündungsteil, die den Griffring umgeben, durch Federkraft bei Zungen in der Öffnung. Die vorgeschlagene Lösung ermöglicht geringeren Materialverbrauch, höhere Formbeständigkeit beim Mündungsteil, die Möglichkeit der Verwendung von Griffringen großer Durchmesser und die Verwendung der Griffringe als Informationsträger. Der Griffring ist jedoch zur Verbindung mit dem Behälter ausschließlich an seinem Innenkreis ausgeführt und insbesondere nicht geeignet und vorgesehen, mit einem durch Kompressionsziehen hergestellten Formteil aus einem Faserwerkstoff kombiniert, an dessen Ziehkragen angebracht zu werden und dessen Dimensionen zu definieren. Außerdem muss der vorgeschlagene Griffring derart steif ausgeführt sein, dass er allein die vorgesehenen Lasten ertragen kann, sowohl den radialen Druck von der Öffnung, als auch die axiale Last beim Tragen des Behälters am Griffring.

Nach der Druckschrift DE 40 09 508 C2 ist ein Träger 2 vorgesehen, der Zuschnitte 1 in einer Behälterform hält und mehrere Behälter verbindet. Die Behälter sind aber nur aus dem Zuschnitt 1 gefaltet und der Träger 2 nicht geeignet, mit einem umgeformten oder durch Kompressionsziehen hergestellten Formteil verwendet zu werden. Zudem wird die nach außen strebende Kraft ebenfalls mit der Innenkontur aufgenommen, was gleichfalls eine hohe Eigensteifigkeit erfordert.

Auch für zylindrische Behälter wie Dosen oder Trommeln ist es bekannt, einen Flanschstabilisator um die Öffnung anzuordnen, um Stabilität insbesondere für das dicht schließende Anbringen eines Deckels zu erreichen. Lösungen hierfür offenbaren die Druckschriften DE 93 19 903 U1, DE 689 05 745 T2 und WO 2004/103845 A2. Hierbei ist aber entweder der Flanschstabilisator unmittelbar das korrespondierende Element zum Deckel oder der Flanschstabilisator wird aus dem Material des Behälters selbst gebildet.

Demgegenüber beschreibt die Druckschrift DE 26 40 479 A1 einen Flanschstabilisator zum Einsatz an einem kegelstumpfförmigen Becher aus Karton, einem Becher für Milchprodukte. Allerdings ist der Becher in der Weise kegelstumpfförmig ausgebildet, dass er am Boden einen größeren Durchmesser als an der Öffnung aufweist. Somit kann er nicht durch Umformen oder Kompressionsziehen hergestellt werden, sondern wird aus einem Zuschnitt geformt. Außerdem ist der Flanschstabilisator an die Kegelstumpfform des Bechers angepasst und selbst als kegelstumpfförmiges Kunststoffteil ausgebildet. Er bildet daher eine innen oder außen am Becherrand angeordnete, im Wesentlichen zylinderförmige Verstärkung, die in der Art einer Banderole eine parallel zur Becherwand verlaufende Ausrichtung aufweist. Das Kunststoffteil behindert ein sortenreines Recycling des Bechers. Selbst wenn eine Kartonbanderole stattdessen eingesetzt würde, stellte die dann erforderliche Fügestelle der Banderole zusätzlichen Aufwand und zugleich einen Schwachpunkt dar. Zudem benötigt die Montage des Kunststoffteils eine entsprechende Vorbereitung des Montagebereichs, z. B. eine Nut.

Aus der Druckschrift JP 2000-333 932 A ist die Stabilisierung eines Papierbechers gegen versehentliches Aufdrücken in der Hand bekannt, also gegenüber äußeren Kräften. Dazu wird der gebördelte Rand verpresst. Zusätzlich wird ein Ring aufgeschoben und mittels Ultraschallsiegeltechnologie mit der verpressten Borde verbunden. Die Befestigung des Rings erfolgt demnach mit zwei Mechanismen, einer Faserverhakung durch Verpressung und weiterhin durch Verbinden mittels einer siegelfähigen, insbesondere thermoplastischen Schicht. Um beide Mechanismen nutzen zu können, ist daher eine (polymere) Siegelschicht notwendig, Reibkräfte der beteiligten Materialien werden nicht genutzt. In der Folge werden erhöhte Anforderungen an das Material gestellt und Arbeitsschritte für die Befestigung sind notwendig.

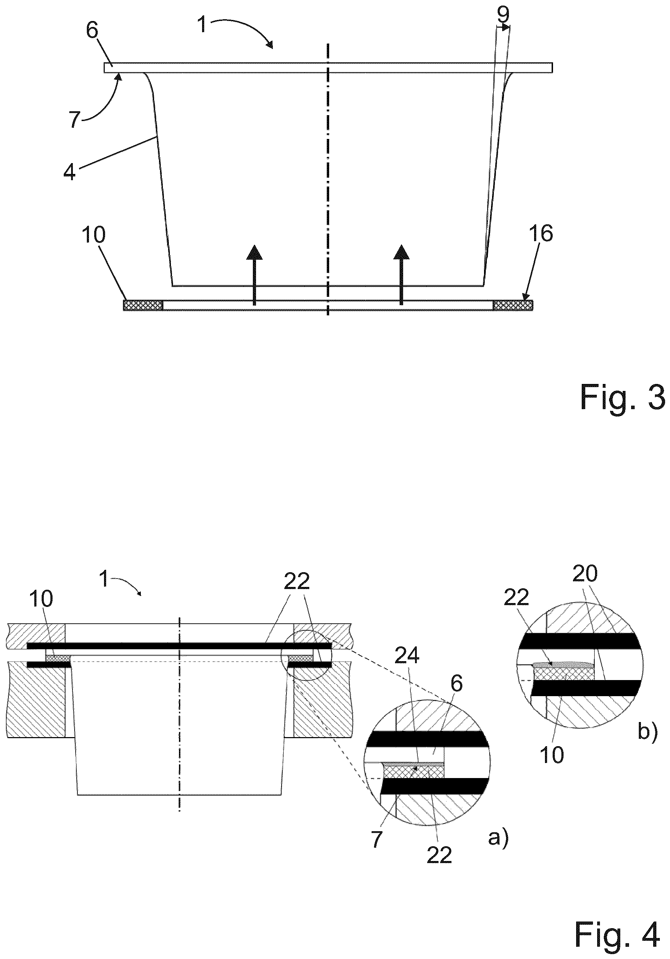

Die Druckschrift JP 2002-120 821 A beschreibt das Aufbringen eines Hilfsrings auf eine verpresste Borde oder Mundrolle. Hier wird der Ring von oben aufgebracht und kann daher auch nur im Stoffschluss eine stabilisierende Wirkung entfalten. Der Ring dient in erster Linie zur sicheren, maschinellen Entstapelbarkeit des Bechers. Dies gilt gleichermaßen für die unterschiedlichen Ausführungen, wie in den Figuren 3, 4 und 5 gezeigt. In Fig. 4 ist ein zusätzliches Element unterhalb der Borde zu erkennen. Somit werden auch hier erhöhte Anforderungen an das Material gestellt, um eine Befestigung zu erreichen, und zusätzliche Arbeitsschritte für die Befestigung des Rings notwendig.

Der Stand der Technik löst insbesondere nicht das Problem der Rückstellung umgeformter Kartonbehältnisse nach dem Formprozess und dem damit verbundenen Verlust der Formstabilität und Maßhaltigkeit. Um die Rückstellung und den Verlust der Maßhaltigkeit zu minimieren, wurden bislang folgende Methoden angewandt:
- Kalibrierung (und Austrocknung) des Formteils unmittelbar nach dem Formprozess;
- Kontrolle der Umformparameter, um innere Spannungen im Material zu mindern;
- Lagerung der Formteile unter gleichbleibenden klimatischen Bedingungen (Temperatur und Luftfeuchtigkeit) oder
- Verhinderung von mechanischen Belastungen der Formteile vor dem Verschließen.

So war bislang eine Maßhaltigkeit der Formteile nur innerhalb großer Form- bzw. Maßtoleranzen möglich. Weiterhin reagieren bekannte Formteile sehr empfindlich auf klimatische Schwankungen (v. a. Luftfeuchtigkeit). Die notwendige Kontrolle der Umformparameter in Industrieanlagen ist nur sehr schwer zu realisieren. Die erwähnte Empfindlichkeit der Formteile gegenüber klimatischen und mechanischen Belastungen erhöht den Verarbeitungsaufwand. Die dabei zu bewältigenden Herausforderungen machen nach dem Stand der Technik aus Karton geformte Verpackungskomponenten für viele Anwender unwirtschaftlich oder technisch nicht realisierbar.

Es ist daher Aufgabe der vorliegenden Erfindung, ein Formteil, ein Verfahren zur Herstellung eines Formteils mit Flanschstabilisator und eine Verwendung eines Flanschstabilisators vorzuschlagen, mit dem sich eine Rückstellung umgeformter Kartonbehältnisse nach dem Formprozess und dem damit verbundenen Verlust der Formstabilität und Maßhaltigkeit mit minimalem Material- und Fertigungsaufwand verhindern lässt.

Die Aufgabe der Erfindung wird zunächst durch ein Formteil gelöst, das durch Umformen eines flächigen, insbesondere ebenen Faserwerkstoffs hergestellt wurde und einen Boden, eine Zarge, die den Boden zylinderförmig umgibt bzw. um diesen umläuft, sowie eine Öffnung aufweist. Die Öffnung ist von einem umlaufenden Flansch umgeben, der im Wesentlichen senkrecht von der Zarge abragt. Das Formteil kann beispielsweise ein Becher aus Pappe sein.

Nach der Erfindung ist das Formteil wenigstens zweiteilig ausgeführt und der Flansch umfasst einen Flanschstabilisator, der an der zum Boden hin weisenden Flachseite des Flanschs, der Unterseite, angebracht. Der Flanschstabilisator ist scheibenförmig ausgebildet und weist eine Innenkontur auf, die der angestrebten Querschnittsform des Formteils im Bereich der Öffnung entspricht. Der Flanschstabilisator ermöglicht ein Überstreifen über die Zarge im Bereich des Bodens bis zum Flansch hin. Die Flachseiten des Flanschstabilisators erstrecken sich im Wesentlichen parallel zum Flansch. Durch den Flanschstabilisator werden die Querschnittsform der Zarge im Bereich der Öffnung und des Flanschs, also die Form des gesamten Formteils, festlegt und stabilisiert. Insoweit stabilisiert der Flanschstabilisator zwar in erster Linie den Flansch, ist aber letztlich für die Endform des Formteils verantwortlich. Das liegt darin begründet, dass die Zarge nach dem Formen, sobald sie die Form verlässt, durch Rückstellkräfte wieder in Richtung der ursprünglichen, der ebenen Form strebt. Dieser Effekt wird auch als Rückstellung bezeichnet. Nur durch den Flanschstabilisator wird dies verhindert und die Zarge wieder in die angestrebte und beim Formen zunächst erzeugte Form gebracht und in dieser gehalten. Dieser Vorgang wird auch als Formfixierung bezeichnet, denn dadurch wird auch später, beispielsweise unter ungünstigen klimatischen Einflüssen, ein unerwünschtes Rückstellen und damit ein Verlust der Form vermieden.

Der Flanschstabilisator ist bevorzugt durch Reibschluss, Verpressen, Anleimen, Ankleben oder Siegeln angebracht. Bei Reibschluss klemmt der Flanschstabilisator mit seiner Innenkontur auf der Außenseite der Zarge, insbesondere wenn diese durch die Rückstellkraft gegen die Innenkontur des Flanschstabilisators strebt. Das Anleimen oder Ankleben, auch das Verpressen erfolgen bevorzugt an der Unterseite des Flanschs.

Das Formteil ist bevorzugt durch Kompressionsziehen hergestellt. Bei dem Kompressionsziehverfahren ist das Fasermaterial während des Kompressionsziehens in einem mit einer definierten Kraft beaufschlagten Faltenhalter geklemmt und wird, soweit es aus dem Fasermaterial mittels eines Entlastungsschnitts getrennt ist, in einen Ziehspalt zwischen einer Ziehbüchse und einem Stempel eingezogen. Das Maß des Ziehspalts ist dabei kleiner als die Stärke des Fasermaterials, sodass es in dem Ziehspalt und während des Ziehens zur Kompression des Fasermaterials kommt. Die Unterschiede zu anderen, äußerlich ählichen Umformverfahren werden nachfolgend erläutert.

Die Umformung von Kunststoffen oder Metallen einerseits und die Umformung von Fasermaterial (nachfolgend beispielhaft anhand von Karton erläutert) andererseits unterscheiden sich derart fundamental voneinander, dass trotz gewisser äußerlicher Ähnlichkeiten eine Übertragung von technologischen Lösungen nicht möglich ist. Die Umformung von Kunststofffolien zu 3-D-Formteilen erfolgt durch das Verfahren Thermoformen, was häufig in der Praxis unter der Bezeichnung Tiefziehen missverständlich bezeichnet wird. Das Thermoformen von Kunststoffen basiert auf der Erwärmung des Materials auf eine Temperatur, in der das Material ein ausgeprägtes Fließverhalten aufweist. Das Material wird allseitig vollständig fixiert und dann mit Hilfe seines plastischen Formänderungsvermögens (vorrangig Dehnung in Bereichen von 30-300 %) aus seiner Dicke heraus fließend in die Form gezogen. Die Materialstärke beim Formteil ist daher deutlich geringer als beim Ausgangsmaterial. Zum Thermoformen werden in der Regel fluidische Druckmedien (Druckluft, Vakuum) genutzt. Das Material wird zum gezielten Erreichen seines Fließzustandes kontrolliert vorgewärmt und in den Werkzeugen abgekühlt, um wieder zu erstarren.

Die Definition des Tiefziehens als solchem umfasst jedoch im Unterschied zum Thermoformen das Umformen aus einem flachen Zuschnitt ohne gezielte Veränderung der Dicke. Dementsprechend sind beide Verfahren technologisch grundlegend verschieden und auch in der Umsetzung in Maschinen entsprechend unterschiedlichen Bedingungen unterworfen. Aus diesem Grund sind übliche Thermoformmaschinen und die dabei verfolgtentechnologischen Lösungen nicht für die Umformung von Karton geeignet. Karton sowie alle anderen Faserwerkstoffe weisen insbesondere kein ausgeprägtes Fließverhalten, besonders nicht bei mehrachsiger Dehnung auf. Selbst bei speziell ausgerüsteten Spezialqualitäten sind nur Dehnungen von 2 bis 12 % erreichbar.

Beim Tiefziehen von Metallblech wird ein flach liegender Zuschnitt (Ronde) mit einem Niederhalter geklemmt und eine definierte Kraft aufgebracht. Der Stempel zieht das Material meist kalt in den Ziehring ein. Im Material stellt sich aufgrund des Spannungszustandes ein Fließen ein, wodurch der geometrisch bedingte Materialüberschuss im Ziehspalt zwischen Stempel und Ziehring ausgeglichen wird. Das Material wird nur bis zur Fließgrenze beansprucht, so dass Falten und Risse verhindert werden. Der Ziehspalt ist größer als die Materialdicke. Der Oberflächenkontakt mit dem Ziehring wird direkt nach der Verformung aufgelöst, um die extrem hohe Reibung im weiteren Verfahrensablauf zu vermeiden.

Das Kompressionsziehen von Karton ist zwar in der Anordnung der Werkzeuge und oberflächlich betrachtet dem Tiefziehen ähnlich, unterscheidet sich jedoch wesentlich in der Materialeinwirkung, in den physikalischen Wirkungen und den Maschinenanforderungen. Der flach liegende Kartonzuschnitt wird durch einen Faltenhalter mit einer definierten Kraft beaufschlagt und der Stempel zieht den Karton in eine Ziehbüchse ein, deren Spalt - und dies stellt einen gravierenden Unterschied des Kompressionsziehens zum Tiefziehen von Metall dar - zum Stempel geringer ist als die Materialdicke. Durch das im Unterschied zu Metall nicht fließfähige Fasermaterial entstehen Falten, die nicht verhindert werden, sondern charakteristischer Bestandteil des Verfahrens sind. Die thermisch unterstützte Kompression in Dickenrichtung des Materials in der Ziehbüchse direkt nach Passieren des Umformradius fixiert die Falten und stellt die Formhaltigkeit der Formteile sicher. Die Falten ziehen sich bis unter den Faltenhalter und sorgen für ein starkes Aufdicken der Formteile.

Beim Kompressionsziehen ist das Austrocknen des Materials eine zentrale Aufgabe, um neue Bindungen in der zellulosen Faserstruktur zu erreichen und Formabweichung zu minimieren. Dazu sind die Ziehbüchse und deren Einwirkzeit unter Kompression von Bedeutung. Die Inhomogenität, Anisotropie und Hygroskopizität des Materials sowie die Kompression in Dickenrichtung als spezifische Prozessgrundlage machen eine vollkommen veränderte Arbeitsweise von Maschinen, orientiert am Materialverhalten, erforderlich. Die Übernahme von Eigenheiten und Lösungen aus den entfernteren Gebieten Thermoformen oder Tiefziehen von Metall ist nicht möglich. Durch mehrdimensionales Umformen wird das Anwendungspotential der Werkstoffe ausgeschöpft. Bei Faserwerkstoffen wie Vlies, Papier, Karton und Pappe ist bislang ein mehrdimensionales Umformen mit geringem Umformverhältnis durch Prägen verbreitet. Der Ziehprozess des Kompressionsziehen dagegen weist hohes Einsatzpotential für die Herstellung von einseitig geschlossenen Hohlkörpern mit hohem Umformverhältnis auf.

Eine vorteilhafte Weiterbildung des Formteils sieht vor, dass der Flanschstabilisator mit dem Flansch an dessen Unterseite durch Siegeln verbunden und der Flansch damit als ein Siegelrand ausgeführt ist. Es hat sich weiterhin als vorteilhaft erwiesen, wenn an dem als Siegelrand dienenden Flansch ein Deckel aufgesiegelt ist. Der Deckel dient als Verschluss der Öffnung des Formteils, vor allem wenn dieses als Verpackung eingesetzt wird.

Der Flanschstabilisator zur Anordnung am Formteil, wie oben beschrieben, ist scheibenförmig ausgebildet und weist eine Innenkontur auf, die der angestrebten Querschnittsform des Formteils im Bereich der Öffnung bzw. des Flanschs entspricht. Der Flanschstabilisator ermöglicht ein Überstreifen über die Zarge im Bereich des Bodens und weiter bis zum Flansch, der einen Anschlag bildet, hin. Der Flanschstabilisator erstreckt sich mit seinen Flachseiten im Wesentlichen parallel zur Ausrichtung des Flanschs. Der Flanschstabilisator ist als eine Ringscheibe ausgebildet ist, wobei die Ringscheibe nicht nur eine kreisförmige Kontur, sondern auch andere geschlossene Konturen aufweisen kann. Die Kontur, insbesondere die Innenkontur, ist abhängig von der angestrebten Querschnittsform des Formteils im Bereich der Öffnung bzw. des Flanschs. Durch den aufgeschobenen Flanschstabilisator wird die Form der Zarge und des Flanschs stabilisiert, da der Flanschstabilisator das Rückbiegen bzw. Rückstellen der Form und Schwankungen der Abmaße durch klimatische Bedingungen, vor allem durch Feuchtigkeit, verhindert.

Die Formhaltigkeit, die Übereinstimmung der vorgesehen Idealform mit der tatsächlichen Form des Formteils, wird durch die Erfindung verbessert und kann weitgehend unabhängig von den Umformparametern erreicht werden. Auch durch klimatische Einflüsse (Luftfeuchtigkeit, Temperatur) wird die Form des Formteils kaum noch negativ beeinflusst. Das Formteil wird durch den Flanschstabilisator stabilisiert und auch robuster gegenüber mechanischen Belastungen. Die grundlegenden Abmaße des Formteils (v. a. der Durchmesser) werden durch den Flanschstabilisator nicht verändert, sodass keine bzw. nur sehr geringe Anpassungen der zugehörigen Verarbeitungsanlage notwendig sind.

Die bevorzugte Ausführungsform des Flanschstabilisators ist aus einem flächigen Faserwerkstoff, alternativ Kunststoff, mit geschlossener Innen- und Außenkontur ausgeschnitten. So ist eine einfache und schnelle Fertigung möglich, weil der Flanschstabilisator mit den richtigen Abmaßen ausgestanzt bzw. ausgeschnitten werden kann und nicht aufwändig am Formteil angelegt bzw. angeklebt werden muss, wie dies beispielsweise bei einem parallel zur Wand ausgerichteten Ring der Fall ist.

Es hat sich als vorteilhaft erwiesen, wenn der Flanschstabilisator eine Ringbreite (bei Ringform) bzw. allgemein eine Stegbreite von 3 bis 5 mm aufweist, wenn die Innenkontur kreisförmig oder oval ist. Bei einer Innenkontur, die anders als kreisförmig oder oval geformt ist, weist der bevorzugte Flanschstabilisator eine Stegbreite von 4 bis 10 mm auf. Der erfindungsgemäße Effekt wird somit bereits durch minimalen Materialeinsatz erreicht und ohne dass unerwünschte sichtbare Veränderungen am Formteil entstehen.

Die Aufgabe der vorliegenden Erfindung wird weiterhin gelöst durch ein Verfahren zur Herstellung eines Formteils durch Formen aus einem ebenen Zuschnitt eines Faserwerkstoffs, wobei das Formteil einen Boden, eine Zarge und eine Öffnung aufweist, wobei die Öffnung von einem umlaufenden Flansch umgeben ist, der mit einem Flanschstabilisator versehen wird.

Nach der Erfindung wird der Flanschstabilisator vom Boden her über die Zarge hinweg gegen den Flansch gedrückt. Der Flanschstabilisator zieht das Formteil im Bereich des Flanschs auf die angestrebte Querschnittsform des Formteils im Bereich der Öffnung gegen eine Rückstellkraft zusammen, wobei die Querschnittsform des Formteils im Bereich der Öffnung festgelegt und stabilisiert wird.

Dabei wird der Flanschstabilisator nach einer vorteilhaften Ausführungsform durch Reibschluss auf die Zarge geklemmt oder, nach einer weiteren vorteilhaften Ausführungsform, mit dem Flansch verbunden. Bei der Verbindung mit dem Flansch erfolgt dies durch Anleimen, Ankleben oder Siegeln.

Eine auch ästhetisch vorteilhafte Verbindung zwischen Flanschstabilisator und Flansch wird erreicht, indem der Flanschstabilisator mit dem Flansch verpresst wird. Eine solche zusätzliche mechanische Verpressung des Flanschstabilisators mit dem Flansch bzw. Siegelrand erzeugt eine hohe optische Qualität des erfindungsgemäßen Formteils. Die Fixierung durch den Flanschstabilisator kann damit gut kaschiert werden und lässt sich nur bei genauem Hinsehen erkennen. Alternativ kann der Flanschstabilisator auch bedruckt oder eingefärbt sein und als Designelement dienen. Dies wird vor allem durch eine vergrößerte Oberfläche, einen Überstand, erreicht.

Ein weiterer Aspekt der vorliegenden Erfindung betrifft eine Verwendung eines Flanschstabilisators. Diese erfolgt an einem Formteil, das durch Formen aus einem ebenen Zuschnitt eines Faserwerkstoffs hergestellt wurde, wobei das Formteil einen Boden, eine Zarge und eine Öffnung aufweist, wobei die Öffnung von einem umlaufenden Flansch umgeben ist, der mit dem Flanschstabilisator versehen wird. Nach der Erfindung wird der Flanschstabilisator im Bereich einer Öffnung, insbesondere an dem diese umgebenden Flansch, eines Formteils eingesetzt, indem dieser über die Zarge geschoben wird. Die angestrebte Querschnittsform des Formteils im Bereich der Öffnung damit festgelegt und stabilisiert. Soweit der Flansch mit dem Flanschstabilisator versehen wird, ist die Anordnung des Flanschstabilisators im Bereich der Öffnung und des Flanschs auf beliebige Weise vorgesehen. Der Flanschstabilisator kann dazu mit dem Flansch und/oder mit der Zarge im Bereich der Öffnung bzw. des Flanschs verbunden sein. Die Verbindung erfolgt beispielsweise durch Reibung, Kleben oder Siegeln.

Der Kern der Erfindung liegt damit in dem Anbringen einer zusätzlichen Komponente an einem Formteil, bevorzugt aus Karton oder einem anderen Faserwerkstoff. Diese Komponente, der Flanschstabilisator, wird bevorzugt unter dem Flansch des Formteils, der als Siegelrand dienen kann, angebracht.

Die Erfindung kombiniert ein umgeformtes Formteil, z. B. ein mittels Kompressionsziehen erzeugtes Kartonteil, mit einem nicht umgeformten, aber speziell zugeschnittenen bzw. ausgestanzten Flanschstabilisator zu einem zweiteiligen Formteil, beispielsweise einem Verpackungsbehältnis. Der zumeist ringförmige Flanschstabilisator wird senkrecht zur Behälterwand, der Zarge, flach unter dem Flansch bzw. Siegelrand an dessen zum Boden weisender Seite angebracht, sofern er nicht mit seiner Innenkontur auf der Zarge durch Reibung klemmt.

Der Flanschstabilisator kann vorteilhafterweise ebenfalls aus Karton bestehen, sodass das Recycling vereinfacht wird. Wo dies nicht von Belang ist, kann der Ring auch aus einem anderen Material, z. B. aus Kunststoff bestehen.

Der Flanschstabilisator kann für runde und ovale Formteilgeometrien als sehr schmaler Ring (ca. 3-5 mm Stegbreite) genutzt werden. Für weitere Geometrien, wie z. B. einen quadratischen oder rechteckigen Querschnitt, ist eine größere Stegbreite notwendig (ca. 4-10 mm).

Durch die gegenüber der Zarge im Wesentlichen senkrechte Anordnung flach unter dem Flansch bzw. Siegelrand kann der Flanschstabilisator über Reibschluss an der Zarge oder durch Anleimen oder Ankleben unter dem Siegelrand angebracht werden. Bei Nutzung eines mit einem siegelbaren Material beschichteten Kartons oder wenn der Flanschstabilisator aus einem allein siegelbaren Material wie Kunststoff besteht, kann der Ring auch von unten an den Siegelrand angesiegelt werden.

Anhand der Beschreibung von Ausführungsbeispielen und ihrer Darstellung in den zugehörigen Zeichnungen wird die Erfindung nachfolgend näher erläutert. Es zeigen:
Fig. 1: schematisch eine Seitenansicht einer Ausführungsform eines erfindungsgemäßen Formteils mit Flanschstabilisator;
Fig. 2: schematisch eine Draufsicht einer Ausführungsform eines Flanschstabilisators;
Fig. 3: schematisch eine Seitenansicht einer Ausführungsform eines Formteils bei der Montage eines Flanschstabilisators;
Fig. 4: schematisch eine geschnittene Seitenansicht einer Ausführungsform eines erfindungsgemäßen Formteils beim Siegeln eines Flanschstabilisators;
Fig. 5: schematisch eine geschnittene Seitenansicht einer Ausführungsform eines erfindungsgemäßen Formteils beim Siegeln eines Flanschstabilisators zusammen mit einem Deckel;
Fig. 6: schematisch eine Ausführungsform eines Flanschstabilisators mit Überstand;
Fig. 7: schematisch eine Ausführungsform eines erfindungsgemäßen Formteils mit Überstand;
Fig. 8: schematisch eine weitere Ausführungsform eines Flanschstabilisators mit Überstand und
Fig. 9: schematisch eine weitere Ausführungsform eines erfindungsgemäßen Formteils mit Überstand.

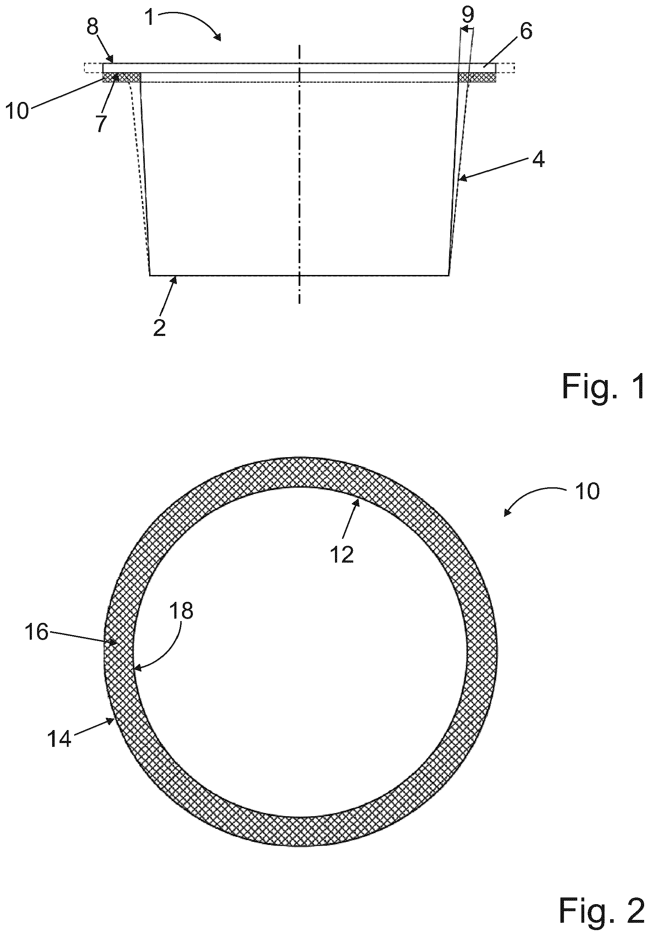

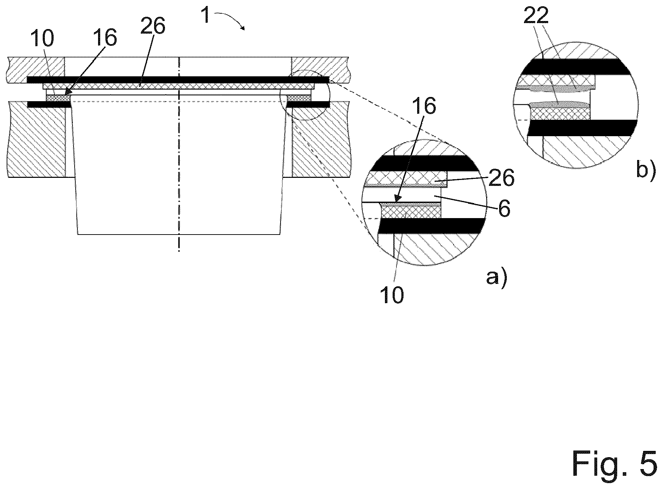

Fig. 1 zeigt schematisch eine Seitenansicht einer Ausführungsform eines erfindungsgemäßen Formteils 1 mit einem Flanschstabilisator 10 in Schnittdarstellung. Das Formteil 1 besteht dabei aus einem Boden 2, einer Zarge 4 und einem Flansch 6, der zugleich als Siegelrand dient (vergleiche Figuren 4 und 5). Der Flansch 6 besitzt eine Flanschunterseite 7, die dem Flanschstabilisator 10 zugewandt ist, und auf der gegenüberliegenden Flachseite eine Flanschoberseite 8.

Die Formfixierung 9 verdeutlicht das Maß, um das der Flanschstabilisator 10 die ansonsten nach der Umformung auftretende Rückbiegung (vergleiche Fig. 3) verhindert. Dadurch stabilisiert der Flanschstabilisator 10 die Form des Formteils 1 und verhindert, auch unter geänderten klimatischen Bedingungen, eine unerwünschte Formänderung.

Fig. 2 zeigt schematisch eine Draufsicht einer Ausführungsform eines Flanschstabilisators 10. Dieser umfasst einen Innenring 12, der mit dem Formteil 1 über die Zarge 4 in Verbindung steht und die Kräfte der Zarge 4, die durch die Rückbiegung und bei der Formfixierung 9 auftreten, aufnimmt. Mit einer ersten Flachseite 16 erfolgt eine Verbindung mit der Flanschunterseite 7 des Formteils 1. Gegenüber der Flachseite 16 angeordnet, weist der Flanschstabilisator 10 eine zweite Flachseite 18 auf, darüber hinaus auch einen Außenring 14.

Fig. 3 zeigt schematisch eine Seitenansicht einer Ausführungsform eines Formteils 1 bei der Montage eines Flanschstabilisators 10 in Schnittdarstellung. Dazu wird der Flanschstabilisator 10 in Pfeilrichtung nach oben über die Zarge 4 zum Flansch 6 und an dessen Unterseite hin geschoben. Danach erfolgt die Verbindung zwischen der ersten Flachseite 16 des Flanschstabilisators 10 mit der Flanschunterseite 7. Mit dem Aufschieben des Flanschstabilisators 10 auf die Zarge 4 geht auch die Formfixierung 9 einher, indem die unerwünschte Rückbiegung rückgängig gemacht wird.

Nachdem der Flanschstabilisator 10 von unten, von der Bodenseite her, auf das Formteil 1 aufgeschoben ist, wird er befestigt und hält das Formteil 1 im Bereich seiner Öffnung fortan stabil in seiner Form. Während des Aufschiebens wird die Rückbiegung um das Maß der Formfixierung 9 rückgängig gemacht. Die Befestigung des Flanschstabilisators 10 kann durch Reibung bzw. Reibschluss an der Zarge 4, durch Klebstoff an der Zarge 4 oder am Flansch 6 oder alternativ zu den vorgenannten Möglichkeiten durch Siegelung am Flansch 6 erfolgen.

Fig. 4 zeigt schematisch eine Seitenansicht einer Ausführungsform eines erfindungsgemäßen Formteils 1 beim Siegeln eines Flanschstabilisators 10 in Schnittdarstellung. Zwei Detaildarstellungen zeigen den Bereich der Siegelnaht 22 jeweils vor und nach dem Siegelvorgang. Dabei erfolgt ein eigenständiges Ansiegeln des Flanschstabilisators 10 unterhalb des Flanschs 6 bzw. Siegelrands des Formteils 1, an der Flanschunterseite 7.

Dabei wird der selbst siegelfähige oder mit einer siegelfähigen Beschichtung versehene Flanschstabilisator 10 mittels industrieüblicher Siegelwerkzeuge 20 (z. B. durch Wärmekontakt) an die Unterseite des Flanschs 6 bzw. Siegelrands, der Flanschunterseite 7, des Formteils 1 angesiegelt. Da die Siegelnaht 22 an dieser Stelle weder dicht sein, noch großen mechanischen Belastungen standhalten muss, ist die Nahtqualität von geringer Bedeutung. Der Siegelprozess gestaltet sich dadurch sehr einfach.

Das eigenständige Ansiegeln ist von Vorteil, wenn das Formteil 1 als Behältnis verwendet und noch unbefüllt und nicht versiegelt gelagert oder zum Abfüllbetrieb transportiert werden soll. Sollte das Material des Formteils 1 selbst mit einer siegelbaren Beschichtung 24 versehen sein, so muss die Ansiegelung des Flanschstabilisators 10 bei Temperaturen unterhalb des Schmelzpunkts der Siegelschicht des Formteils 1 geschehen. Es hat sich gezeigt, dass beispielsweise ein Flanschstabilisator 10 mit PE-Beschichtung und ein Formteil 1 mit PET-Beschichtung eine hierfür geeignete Materialkombination darstellen.

Fig. 5 zeigt schematisch eine Seitenansicht einer Ausführungsform eines erfindungsgemäßen Formteils 1 beim Ansiegeln der ersten Flachseite 16 eines Flanschstabilisators 10 zusammen mit einem Deckel 26 an den Flansch 6. Detaildarstellungen a) und b) zeigen den Bereich der Siegelnaht 22 jeweils vor und nach dem Siegelvorgang. Dabei erfolgt das Ansiegeln des Flanschstabilisators 10 gleichzeitig mit dem Versiegeln des Formteils 1 mit dem Deckel 26, der als Siegelplatine fungiert.

Der Vorgang des Ansiegelns des Flanschstabilisators 10 lässt sich somit durch das Verschließen des Formteils 1 mittels Siegeln ergänzen. Dabei ist kein zusätzlicher Arbeitsschritt notwendig. Es ist lediglich zu beachten, dass die Siegelzeit durch die zusätzliche Isolationswirkung des Materials des Flanschstabilisators 10 erhöht wird. Die Nahtqualität beim Ansiegeln des Flanschstabilisators 10 ist von untergeordneter Bedeutung. Daher ist nicht davon auszugehen, dass die Siegelparameter (z. B. Druck, Temperatur) gegenüber einer Siegelung ohne Flanschstabilisator 10 wesentlich verändert werden müssen.

Die Figuren 6 bis 9 zeigen eine abweichende Außenkontur 14 des Flanschstabilisators 10. Dabei hat der Überstand 28 bei der Ausführungsform gemäß Fig. 6 die Form einer abragenden Ecke, die als Griff oder Gestaltungselement dient. In Fig. 7 wird diese Ausführungsform zusammen mit dem Formteil 1 in einer Ansicht von oben gezeigt. Dabei sind der Boden 2 und die Zarge 4 verdeckt durch einen nicht bezeichneten, mit dem Flansch 6 verbundenen Deckel gestrichelt dargestellt.

Bei der Ausführungsform gemäß Fig. 8 hat der Überstand 28 eine größere Fläche und dient als Informationsträger der Aufnahme von Aufschriften oder Hinweisen. Fig. 9 zeigt diese Ausführungsform zusammen mit dem Formteil 1 in einer Ansicht von oben.

### Bezugszeichenliste

- 1: Formteil
- 2: Boden
- 4: Zarge
- 6: Flansch, Siegelrand
- 7: Flanschunterseite
- 8: Flanschoberseite
- 9: Formfixierung
- 10: Flanschstabilisator
- 12: Innenkontur, Innenring
- 14: Außenkontur, Außenring
- 15: Stegbreite
- 16: erste Flachseite
- 18: zweite Flachseite
- 20: Siegelwerkzeug
- 22: Siegelnaht
- 24: siegelbare Beschichtung
- 26: Deckel
- 28: Überstand

## Patentansprüche

1. Formteil, das aus einem flächigen Faserwerkstoff geformt ist und einen Boden (2), eine Zarge (4) und eine Öffnung aufweist, wobei die Öffnung von einem umlaufenden Flansch (6) umgeben ist, **dadurch gekennzeichnet, dass** das Formteil (1) einen Flanschstabilisator (10) umfasst, der an der zum Boden (2) hin weisenden zweiten Flachseite (18) des Flanschs (6) angebracht ist, wobei der Flanschstabilisator (10) scheibenförmig ausgebildet ist und eine Innenkontur (12) aufweist, die der angestrebten Querschnittsform des Formteils (1) im Bereich der Öffnung entspricht und ein Überstreifen über die Zarge (4) im Bereich des Bodens (2) bis zum Flansch (6) hin ermöglicht, wobei die Flachseiten (16, 18) des Flanschstabilisators (10) sich im Wesentlichen parallel zum Flansch (6) erstrecken und wobei der Flanschstabilisator (10) die Querschnittsform der Zarge (4) im Bereich der Öffnung und des Flanschs (6) festlegt und stabilisiert.

2. Formteil nach Anspruch 1, wobei das Formen durch Kompressionsziehen erfolgt ist.

3. Formteil nach Anspruch 1oder 2, wobei der Flanschstabilisator (10) mit dem Flansch (6) durch Reibschluss, Anleimen, Ankleben oder Siegeln verbunden ist, wobei zum Siegeln der Flansch (6) als Siegelrand ausgeführt ist.

4. Formteil nach Anspruch 3, wobei zum Verschluss der Öffnung an dem Siegelrand ein Deckel (26) aufgesiegelt ist.

5. Formteil nach einem der vorherigen Ansprüche, wobei der Flanschstabilisator (10) aus einem flächigen Faserwerkstoff oder Kunststoff und mit geschlossener Innenkontur (12) und geschlossener Außenkontur (14) ausgeschnitten ist.

6. Formteil nach einem der vorherigen Ansprüche, wobei zumindest die Innenkontur (12) des Flanschstabilisators (10) kreisförmig oder oval ist und der Flanschstabilisator (10) eine Stegbreite (15) von 3 bis 5 mm aufweist

7. Formteil nach einem der Ansprüche 1 bis 5, wobei zumindest die Innenkontur (12) des Flanschstabilisators (10) anders als kreisförmig oder oval geformt ist und der Flanschstabilisator (10) eine Stegbreite (15) von 4 bis 10 mm aufweist.

8. Formteil nach einem der vorherigen Ansprüche, wobei Innenkontur (12) und Außenkontur (14) in der Weise voneinander abweichen, dass ein Überstand (28) ausgebildet wird.

9. Verfahren zur Herstellung eines Formteils (1) durch Formen aus einem ebenen Zuschnitt eines Faserwerkstoffs, wobei das Formteil (1) einen Boden (2), eine Zarge (4) und eine Öffnung aufweist, wobei die Öffnung von einem umlaufenden Flansch (6) umgeben ist, der mit einem Flanschstabilisator (10) versehen wird, **dadurch gekennzeichnet, dass** der Flanschstabilisator (10) vom Boden (2) her über die Zarge (4) hinweg gegen den Flansch (6) gedrückt wird und das Formteil (1) im Bereich des Flanschs (6) auf die angestrebte Querschnittsform des Formteils (1) im Bereich der Öffnung gegen eine Rückstellkraft zusammenzieht, wobei die Querschnittsform des Formteils (1) im Bereich der Öffnung festgelegt und stabilisiert wird.

10. Verfahren nach Anspruch 9, wobei das Formen durch Kompressionsziehen erfolgt.

11. Verfahren nach Anspruch 9 oder 10, der Flanschstabilisator (10) durch Reibschluss auf die Zarge (4) geklemmt oder mit dem Flansch (4) verbunden wird.

12. Verfahren nach Anspruch 11, wobei die Verbindung des Flanschstabilisators (10) mit dem Flansch (6) durch Verpressen, Anleimen, Ankleben oder Siegeln erfolgt.

13. Verfahren nach Anspruch 12, wobei der Flanschstabilisator (10) zusammen mit einem Deckel (26) an den Flansch (6) gesiegelt wird.

14. Verwendung eines Flanschstabilisators (10) an einem Formteil (1), das durch Formen aus einem ebenen Zuschnitt eines Faserwerkstoffs hergestellt wurde, wobei das Formteil (1) einen Boden (2), eine Zarge (4) und eine Öffnung aufweist, wobei die Öffnung von einem umlaufenden Flansch (6) umgeben ist, der mit dem Flanschstabilisator (10) versehen wird, **dadurch gekennzeichnet, dass** der Flanschstabilisator (10) im Bereich der Öffnung über die Zarge (4) geschoben und an dem Flansch (6) des Formteils (1) gemäß einem der Ansprüche 1 bis 8 eingesetzt und die angestrebte Querschnittsform des Formteils (1) im Bereich der Öffnung damit festgelegt und stabilisiert wird.
